(19) Europäisches Patentamt
European Patent Office
Office européen des brevets

(11) **EP 4 579 081 A1**

(12) **EUROPEAN PATENT APPLICATION**
published in accordance with Art. 153(4) EPC

(43) Date of publication:
**02.07.2025 Bulletin 2025/27**

(21) Application number: **23872052.8**

(22) Date of filing: **19.09.2023**

(51) International Patent Classification (IPC):
**F04B 49/10** (2006.01)     **G01M 99/00** (2011.01)

(52) Cooperative Patent Classification (CPC):
**F04B 49/10; G01M 99/00**

(86) International application number:
**PCT/JP2023/033960**

(87) International publication number:
**WO 2024/070824 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022157766**

(71) Applicant: **MAYEKAWA MFG. CO., LTD.**
**Tokyo 135-8482 (JP)**

(72) Inventors:
• **TSUJI, Takuma**
**Tokyo 135-8482 (JP)**

• **OKU, Tatsuya**
**Tokyo 135-8482 (JP)**
• **IKEDA, Yasuaki**
**Tokyo 135-8482 (JP)**
• **TAKEYA, Hideki**
**Tokyo 135-8482 (JP)**
• **ABE, Keiji**
**Tokyo 135-8482 (JP)**
• **NAKAJIMA, Hisashi**
**Tokyo 135-8482 (JP)**

(74) Representative: **Regimbeau**
**20, rue de Chazelles**
**75847 Paris Cedex 17 (FR)**

(54) **STATE MONITORING SYSTEM AND STATE MONITORING METHOD**

(57)     A condition monitoring system acquires a first parameter indicating an operating condition of a compressor and a second parameter correlated with a degree of superheat of a fluid flowing into the compressor, in order to monitor a condition of a valve of the compressor. A severity factor corresponding to the first parameter and the second parameter, and indicating a life consumption level of the valve is calculated using a map. The severity factor is used to calculate a life consumption of the valve in a unit period by using at least a length of the unit period and a rotation speed of the compressor for each unit period, and an accumulated life consumption is calculated by accumulating the life consumption.

## FIG. 1

## Description

TECHNICAL FIELD

The present disclosure relates to a condition monitoring system and a condition monitoring method.

BACKGROUND

For example, as a rotating machinery driven by power from a power source such as a motor, a pump for pumping a liquid or a compressor for compressing a medium such as a gas is known. In this type of compressor, components deteriorate to some extent as an operating time passes. If the deterioration of the components progresses, it may lead to a breakdown or a malfunction, which may cause a problem in operation of the compressor. Therefore, it is important to prevent such breakdown or malfunction by performing maintenance such as replacement or repair of the components at a predetermined timing.

The timing at which the maintenance of the compressor is performed can vary depending on an operation form or an external environment of the compressor. For example, Patent Document 1 discloses a compressor that can calculate maintenance implementation time (maintenance cycle) of a compressor body on the basis of operating conditions of the compressor (a temperature of the compressor, a pressure of a compressed fluid, and the like).

Citation List

Patent Literature

Patent Document 1: JP6306740B

SUMMARY

Technical Problem

In a compressor, valves operated at a timing of suction and discharge of a fluid to be compressed are important parts which, if they are broken or malfunction, will cause major problems in operation of the compressor. In assessment of a maintenance timing of the compressor, a life consumption of the important part such as the valve serves as an effective index.

The life consumption of the valve of the compressor can be expressed as a function of the number of times the valve is opened and closed (the number of collisions). The number of times the valve is opened and closed can be obtained using a rotation speed and an operating time of the compressor. However, the life of the valve of the compressor consumed by a single opening and closing also differs depending on a collision speed, a collision posture, etc., of the valve, and therefore it is difficult to accurately calculate the life consumption of the valve only from the rotation speed and the operating time of the compressor.

In addition, the operating conditions of the compressor influence the collision speed, the collision posture, etc., of the valve of the compressor. Therefore, in order to accurately calculate the life consumption of the valve, it is effective to take the operating conditions of the compressor into consideration. According to the findings of the present inventors, it was found that a correlation between the operating conditions of the compressor and the life consumption of the valve varies nonlinearly depending on the degree of superheat of a fluid flowing into the compressor, and even if the operating conditions are the same, the life consumption of the valve is not constant if the degree of superheat of the fluid flowing into the compressor is different. In Patent Document 1 described above, a substantial life assessment is performed by calculating the maintenance timing of the compressor only by the operating conditions, but since the degree of superheat of the fluid flowing into the compressor is not taken into consideration, accurate assessment cannot be performed.

At least one embodiment of the present disclosure was made in view of the above issue, and an object of at least one embodiment of the present disclosure is to provide a condition monitoring system and a condition monitoring method, which are capable of accurately assessing the life consumption of the valve.

Solution to Problem

In order to solve the above-described problems, a condition monitoring system according to at least one embodiment of the present disclosure is a condition monitoring system for a valve of a compressor, including: a parameter acquisition unit for acquiring at least one first parameter indicating an operating condition of the compressor and a second parameter correlated with a degree of superheat of a fluid flowing into the compressor; a factor calculation unit for calculating, from a map defining a relationship among the first parameter, the second parameter, and a severity factor indicating a life consumption level of the valve, the severity factor corresponding to the first parameter and the second parameter; and a calculation unit for calculating an accumulated life consumption by accumulating a life consumption of the valve in a unit period, which is calculated using at least a length of the unit period, a rotation speed of the compressor for each unit period, and the severity factor.

In order to solve the above-described problems, a condition monitoring method according to at least one embodiment of the present disclosure is a condition monitoring method for a valve of a compressor, including: a step of acquiring at least one first parameter indicating an operating condition of the compressor and a second parameter correlated with a degree of superheat of a fluid flowing into the compressor; a step of calculating, from a map defining a relationship among the first parameter, the second parameter, and a severity factor indicating a life consumption level of the valve, the severity factor corresponding to the first parameter and the second parameter; and a step of calculating an accumulated life consumption by accumulating a life consumption of the valve in a unit period, which is calculated using at least a length of the unit period, a rotation speed of the compressor for each unit period, and the severity factor.

Advantageous Effects

According to at least one embodiment of the present disclosure, it is possible to provide a condition monitoring system and a condition monitoring method, which are capable of accurately assessing a life consumption of a valve.

BRIEF DESCRIPTION OF DRAWINGS

FIG. 1 is a diagram showing a schematic configuration of a compressor.
FIG. 2 is a block diagram showing a configuration of a condition monitoring system according to an embodiment.
FIG. 3 is a flowchart showing a condition monitoring method according to an embodiment.
FIG. 4 is an example of a map acquired in step S2 of FIG. 3.
FIG. 5 is a graph showing a time transition of an accumulated life consumption calculated in step S5 of FIG. 3.
FIG. 6 is a graph showing how to estimate a future accumulated life consumption from a past trend.

DETAILED DESCRIPTION

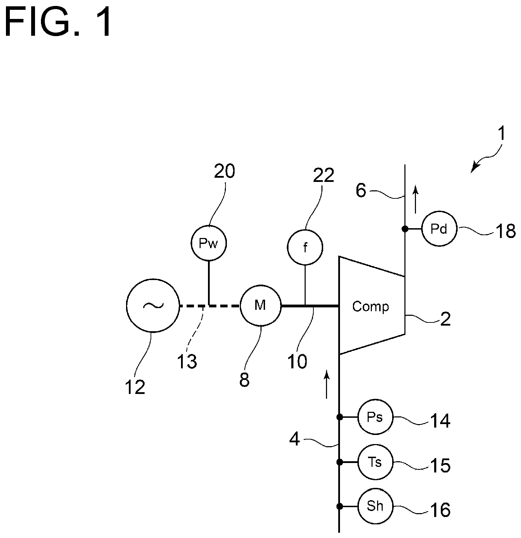

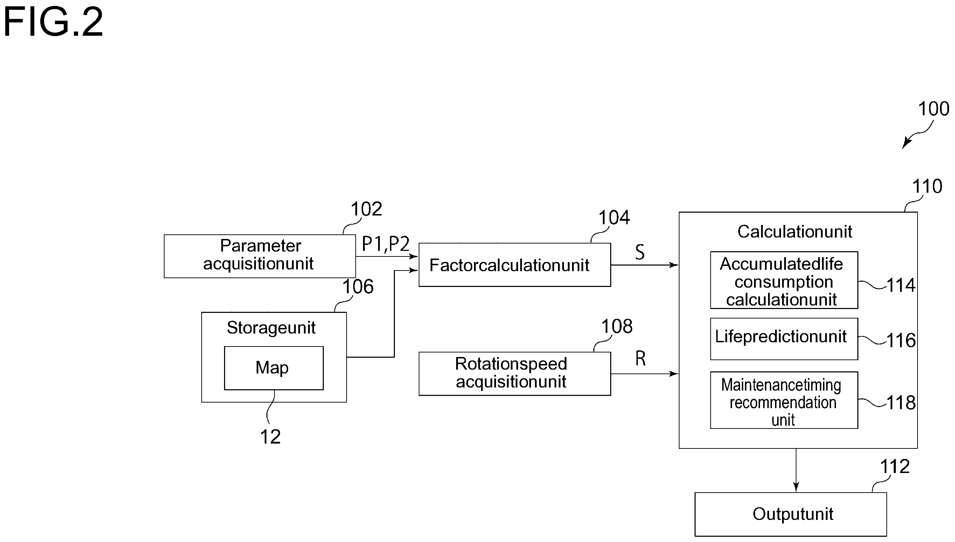

Some embodiments of the present invention will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present invention.
First, a compressor 1 to be monitored by a condition monitoring system 100 according to at least one embodiment of the present disclosure will be described with reference to FIG. 1. FIG. 1 is a diagram showing a schematic configuration of the compressor 1.
The compressor 1 includes a compressor body 2, a suction line 4 located upstream of the compressor body 2, and a discharge line 6 located downstream of the compressor body 2. The compressor body 2 is a reciprocating compressor and is provided with a motor 8 as a power source. The motor 8 is connected to the compressor body 2 via a drive shaft 10. The motor 8 is driven by power supplied from a power source 12 (for example, a commercial power source), and the driving force is transmitted to the compressor body 2 via the drive shaft 10. When the compressor body 2 is driven, a fluid (air, refrigerant, etc.) is introduced into the compressor body 2 from a fluid supply source (not shown) via the suction line 4 and compressed in the compressor body 2. The fluid compressed in the compressor body 2 is discharged toward a supply destination (not shown) via the discharge line 6.
The suction line 4 is provided with a suction pressure sensor 14 for detecting a pressure (hereinafter, referred to as a "suction pressure ps" as appropriate) of the fluid supplied to the compressor body 2, a suction temperature sensor 15 for detecting a temperature (hereinafter, referred to as a "suction temperature Ts" as appropriate) of the fluid supplied to the compressor body 2, and a superheat degree sensor 16 for detecting a superheat degree Sh of the fluid supplied to the compressor body 2. The discharge line 6 is provided with a discharge pressure sensor 18 for detecting a pressure (hereinafter, referred to as a "discharge pressure pd" as appropriate) of the fluid discharged from the compressor body 2. A power supply line 13 for supplying power from the power source 12 to the compressor body 2 is provided with a power sensor 20 for detecting power consumption Pw or a power frequency Pf of the compressor body 2. The compressor body 2 is also provided with a rotation speed sensor 22 for detecting a rotation speed f of the compressor body 2.
A detection result of each of these sensors can be output as an electrical signal, and is acquired by the condition monitoring system 100 described later and is used for various kinds of calculation processing (if there are detection results that are not used by the condition monitoring system 100, the sensors corresponding to those detection results can be omitted as appropriate).
Next, the condition monitoring system 100 for monitoring the condition of the compressor 1 having the above configuration will be described. FIG. 2 is a block diagram showing a configuration of the condition monitoring system 100 according to an embodiment.
The condition monitoring system 100 includes, for example, a Central Processing Unit (CPU), a Random Access Memory (RAM), a Read Only Memory (ROM), a computer-readable storage medium, and the like. Then, a series of processes for realizing various functions is stored in the storage medium, etc., in the form of a program, as an example. The CPU reads the program out to the RAM, etc., and executes processing/calculation processing of information, thereby realizing the various functions. A configuration where the program is installed in the ROM or another storage medium in advance, a configuration where the program is provided in a state of being stored in the computer-readable storage medium, a configuration where the program is distributed via a wired or wireless communication means, etc., may be applied. The computer-readable storage medium is a magnetic disk, a magneto-optical disk, a CD-ROM, a DVD-ROM, a semiconductor memory, etc.

The condition monitoring system 100 includes a parameter acquisition unit 102, a factor calculation unit 104, a storage unit 106, a rotation speed acquisition unit 108, a calculation unit 110, and an output unit 112.

The parameter acquisition unit 102 is configured to acquire a first parameter P1 and a second parameter P2. The first parameter P1 is at least one parameter indicating an operating condition of the compressor 1. In the present embodiment, the first parameter P1 includes at least one of the suction pressure ps detected by the suction pressure sensor 14, the discharge pressure pd detected by the discharge pressure sensor 18, and the power consumption Pw or the power frequency Pf detected by the power sensor 20. Further, the second parameter P2 is a parameter correlated with the degree of superheat of the fluid flowing into the compressor 1. In the present embodiment, the second parameter P2 includes at least one of the superheat degree Sh detected by the superheat degree sensor 16 or the suction temperature Ts detected by the suction temperature sensor 15.

The parameter acquisition unit 102 acquires each parameter at a sampling frequency dt [min]. A numerical range of the sampling frequency dt is not limited, but is set so that each parameter can continuously be acquired in an appropriate period (for example, not less than one year) in order to assess the life of the compressor 1, for example.

Further, in the following embodiment, as described above, a case will be exemplified in which the suction pressure ps and the discharge pressure pd are selected as the first parameter P1 and the superheat degree Sh is selected as the second parameter P2, but other combinations are also possible. For example, the suction pressure ps and the power consumption Pw may be selected as the first parameter P1, and the suction temperature Ts may be selected as the second parameter P2. Further, the discharge pressure pd and the power consumption Pw (or the power frequency Pf) may be selected as the first parameter P1, and the suction temperature Ts may be selected as the second parameter P2.

The factor calculation unit 104 is configured to calculate a severity factor S on the basis of the first parameter P1 and the second parameter P2 acquired by the parameter acquisition unit 102. The severity factor S is an assessment index corresponding to a life consumption of a valve of the compressor 1, and is calculated on the basis of both the first parameter P1 and the second parameter P2.

The factor calculation unit 104 calculates the severity factor S by using a map M indicating a relationship among the first parameter P1, the second parameter P2, and the severity factor S. The map M is constructed in advance by an experimental, empirical or simulation method to indicate the relationship among the first parameter P1, the second parameter P2, and the severity factor S, and is readably stored in the storage unit 106 such as a memory. The factor calculation unit 104 acquires the map M by accessing the storage unit 106 and obtains, on the basis of the map M, the severity factor S corresponding to the first parameter P1 and the second parameter P2 acquired by the parameter acquisition unit 102. The calculation of the severity factor S in the factor calculation unit 104 is thus performed by using such map M, in consideration of non-linearity of the degree of superheat of the fluid flowing into the compressor 1 with respect to the life consumption.

The rotation speed acquisition unit 108 is configured to acquire the rotation speed f of the compressor body 2. The rotation speed f can be acquired as a detected value of the rotation speed sensor 22 as described above.

The calculation unit 110 is configured to perform various calculations for monitoring the condition of the compressor 1, on the basis of the severity factor S calculated by the factor calculation unit 104 and the rotation speed f acquired by the rotation speed acquisition unit 108. The calculation unit 110 includes a plurality of functional blocks according to calculation contents thereof, and specifically includes an accumulated life consumption calculation unit 114, a life prediction unit 116, and a maintenance timing recommendation unit 118.

The accumulated life consumption calculation unit 114 is configured to calculate an accumulated life consumption L in a preset unit period. The accumulated life consumption L is obtained by accumulating the life consumption of the valve of the compressor body 2 in the unit period, which is calculated using at least the rotation speed f acquired by the rotation speed acquisition unit 108 and the severity factor S calculated by the factor calculation unit 104, in the unit period.

The life prediction unit 116 is configured to predict a remaining life of the valve of the compressor 1 from a past trend of the accumulated life consumption L. The accumulated life consumption L is sequentially calculated by the accumulated life consumption calculation unit 114 described above. The life prediction unit 116 identifies the past trend of the accumulated life consumption L on the basis of a time transition of the accumulated life consumption L calculated sequentially, and predicts the remaining life on the basis of the past trend. For example, a transition of the future accumulated life consumption L is estimated from the past trend, and a period until the accumulated life consumption L estimated reaches a certain threshold is predicted as the remaining life.

The maintenance timing recommendation unit 118 is configured to calculate a recommended timing for next maintenance of the compressor 1 to be monitored. The recommended timing for next maintenance is obtained, for example, by subtracting a predetermined period $t_n$ as a margin from a life $t_{thr}$ calculated by the life prediction unit 116. Whereby, it is possible to prevent a malfunction or a breakdown by recommending the next maintenance before a timing at which a possibility of a malfunction or a breakdown actually occurring in the compressor 1 increases due to reaching the end of the life $t_{thr}$.

Further, as with the life prediction unit 116, the maintenance timing recommendation unit 118 identifies the past trend of the accumulated life consumption L on the basis of the time transition of the accumulated life consumption L calculated sequentially, and predicts the recommended timing for next maintenance on the basis of the past trend. For example, the transition of the future accumulated life consumption L is estimated from the past trend, and a timing at which the accumulated life consumption L estimated reaches a certain threshold is predicted as the recommended timing for next maintenance.

The output unit 112 is configured to output a calculation result of the calculation unit 110. The aforementioned accumulated life consumption L, remaining life, and recommended timing for next maintenance, which are calculated by the calculation unit 110, are output by the output unit 112 and recognized by an operator of the condition monitoring system 100. For example, the accumulated life consumption L or the remaining life is displayed in a manner that can be recognized by the operator using a display device such as a display. In addition, when the recommended timing for next maintenance arrives, the operator may be notified that the recommended timing for next maintenance has arrived, for example, by an alarm or display.

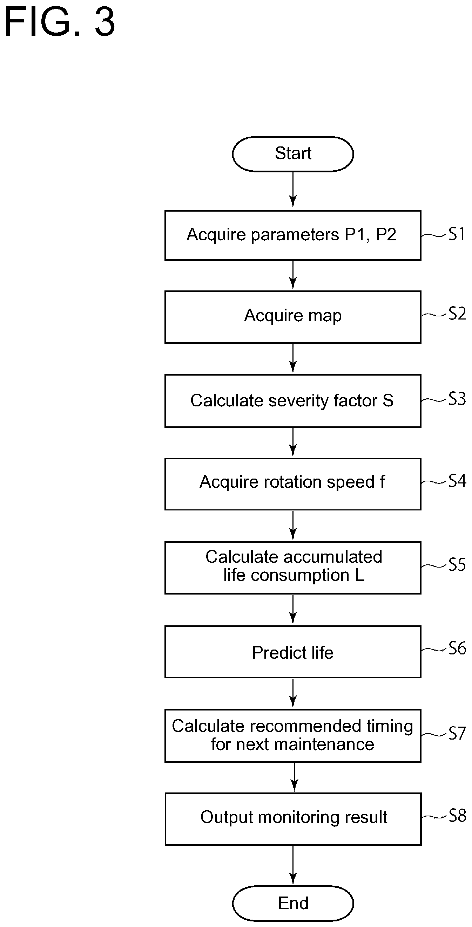

Next, a condition monitoring method implemented by the condition monitoring system 100 having the above configuration will be described. FIG. 3 is a flowchart showing the condition monitoring method according to an embodiment.

First, the parameter acquisition unit 102 acquires the first parameter P1 and the second parameter P2 (step S1). The first parameter P1 can optionally be selected from at least one parameter regarding the operating condition of the compressor 1. However, as an example, in the present embodiment, a case will be described in which the suction pressure ps detected by the suction pressure sensor 14 and the discharge pressure pd detected by the discharge pressure sensor 18 are selected as the first parameter P1. Further, the second parameter P2 can optionally be selected from a parameter correlated with the degree of superheat of the fluid flowing into the compressor body 2. However, as an example, in the present embodiment, a case will be described in which the superheat degree Sh detected by the superheat degree sensor 16 is selected as the second parameter P2.

Next, the factor calculation unit 104 acquires the map M by accessing the storage unit 106 (step S2). As described above, the map M is stored in advance in the storage unit 106, and defines the relationship among the first parameter P1, the second parameter P2, and the severity factor S.

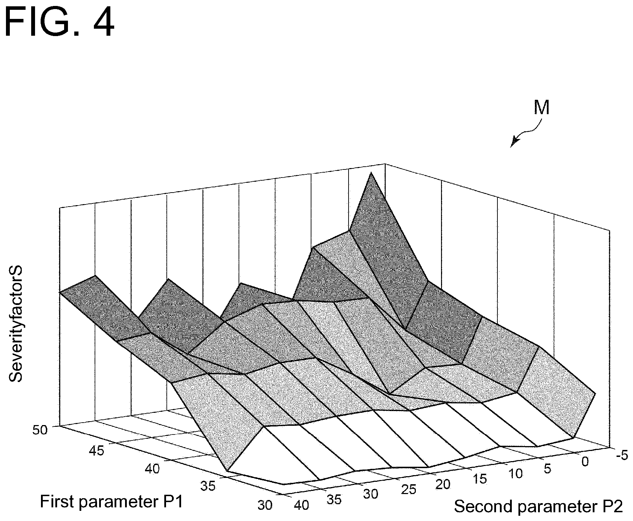

Herein, FIG. 4 is an example of the map M acquired in step S2 of FIG. 3. In FIG. 4, the map M is shown as a three-dimensional map in which the first parameter P1 is on the X-axis, the second parameter P2 is on the Y-axis, and the severity factor S is on the Z-axis. In this example, in order to make an image of the map M easier to understand, the first parameter P1 and the second parameter P2 are shown one-dimensionally on the X-axis and the Y-axis, respectively. However, if the first parameter P1 or the second parameter P2 includes a plurality of parameters, the map M may be prepared as a multidimensional map with not less than three dimensions.

Next, the factor calculation unit 104 calculates the severity factor S (step S3). In step S3, the corresponding severity factor S is calculated by applying the first parameter P1 and the second parameter P acquired in step S1 to the map M acquired in step S2. The severity factor S has a nonlinear behavior with respect to the first parameter P1 and the second parameter P2, but as described above with reference to FIG. 4, by preparing the severity factor S as the map M, it is possible to uniquely obtain the severity factor S corresponding to the first parameter P1 and the second parameter P2.

Next, the rotation speed acquisition unit 108 acquires the rotation speed f of the compressor body 2 (step S4). In step S4 , the rotation speed acquisition unit 108 can acquire the rotation speed f on the basis of the detection result of the rotation speed sensor 22.

Next, the accumulated life consumption calculation unit 114 calculates the accumulated life consumption L in the unit period by using at least the severity factor S calculated in step S3 and the rotation speed f acquired in step S4 (step S5). Specifically, the accumulated life consumption L is calculated by the following equation, with the sampling frequency dt [min] and an elapsed time $\tau$ [min] from a previous maintenance timing to the pre-sent:

$$L = \int_0^\tau S(p_d, p_s, f) \cdot f \cdot dt \qquad (1)$$

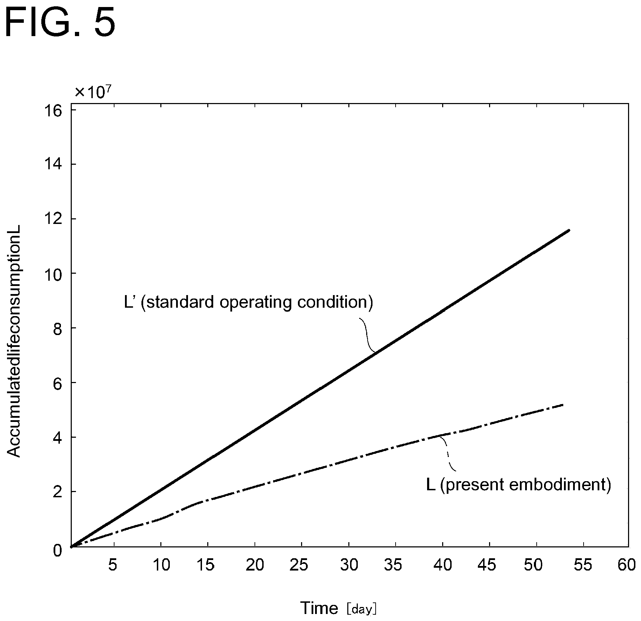

Herein, FIG. 5 is a graph showing the time transition of the accumulated life consumption L calculated in step S5 of FIG. 3. The accumulated life consumption L calculated by the above (1) gradually increases as the operating time of the compressor 1 progresses. FIG. 5 also shows, as a comparative example, a time transition of an accumulated life consumption L' calculated on the basis of a standard operating condition. In the standard operating condition, the accumulated life consumption L' is calculated under a relatively severe operating condition, and is expressed, for example, as a linear function increasing at a constant rate of change with respect to time. In contrast, the accumulated life consumption L calculated in step S5 is lower than the accumulated life consumption L' based on the standard operating condition. This means that since the accumulated life consumption L is calculated in consideration of the nonlinear behavior of the severity factor S with respect to the second parameter P2, the accumulated life consumption L does not include an excessive margin compared to the accumulated life consumption L' based on the standard operating condition and the condition of the compressor 1 is accurately assessed.

Next, the life prediction unit 116 predicts the remaining life of the valve of the compressor 1 on the basis of the accumulated life consumption L calculated in step S5 (step S6). In Step S6, the remaining life is predicted by identifying the past trend from the time transition of the accumulated life consumption L, and estimating the future accumulated life consumption L from the past trend.

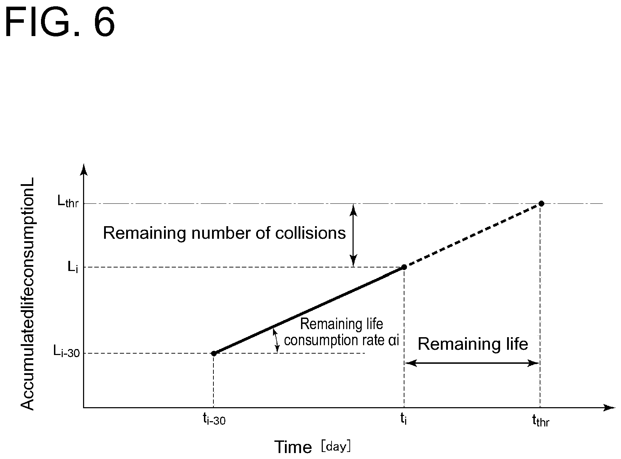

Herein, FIG. 6 is a graph showing how to estimate the future accumulated life consumption L from the past trend of the accumulated life consumption L. In this example, the horizontal axis represents time, data is acquired and calculated on a daily basis, and the accumulated life consumption L for 30 days from time $t_{i-30}$ to time $t_i$ (present) is obtained by repeating steps S1 to S5 described above. The life prediction unit 116 approximates the past trend in the above period with a linear function, and calculates a linear coefficient $\alpha i$ as the life consumption rate in the above period by the following equation.

$$\alpha_i = \frac{L_i - L_{i-30}}{t_i - t_{i-30}} \qquad (\,2\,)$$

In the above equation (2), $L_{i-30}$ is an accumulated life consumption corresponding to the time $t_{i-30}$, and $L_i$ is an accumulated life consumption corresponding to the time $t_i$.

The life prediction unit 116 predicts the transition of the future accumulated life consumption L by using the life increase rate $\alpha i$ obtained by the above equation (2). Specifically, as indicated by a dashed line in FIG. 6, the transition of the future accumulated life consumption L is predicted by assuming that the linear function behavior identified as the past trend will continue into the future. Then, as a point in time at which a reference value of the accumulated life consumption corresponding to a preset life (hereinafter, referred to as an "accumulated life consumption threshold $L_{thr}$" as appropriate) is reached, the life $t_{thr}$ is predicted by the following equation.

$$t_{thr} = \frac{L_{thr} - L_i}{\alpha_i} \;+\; t_i \qquad (\,3\,)$$

Next, the maintenance timing recommendation unit 118 calculates the recommended timing for next maintenance (step S7). A recommended timing $t_m$ for next maintenance is obtained by the following equation, for example, by subtracting the predetermined period $t_n$ from the life $t_{thr}$ calculated in step S6.

$$t_m = t_{thr} - t_n \qquad (\,4\,)$$

In this case, the recommended timing $t_m$ is obtained as a timing that can ensure a margin of the predetermined period $t_n$, from the life $t_{thr}$. Whereby, it is possible to prevent the malfunction or the breakdown by recommending the next maintenance before the timing at which the possibility of the malfunction or the breakdown actually occurring in the compressor 1 increases due to reaching the end of the life $t_{thr}$.

Next, the output unit 112 outputs the calculation result (step S8). The calculation result output in step S8 includes, for example, at least one of the accumulated life consumption L calculated in step S5, the life $t_{thr}$ calculated in step S6, and the recommended timing $t_m$ for next maintenance calculated in step S7.

The above step corresponding to the calculation result which is not included in the output result in step S8 can be omitted as appropriate.

As described above, according to each of the above embodiments, the severity factor which serves as the assessment index corresponding to the life consumption of the valve of the compressor is calculated on the basis of both the first parameter indicating the operating condition and the second parameter correlated with the degree of superheat of the fluid flowing into the compressor. Since the calculation of the severity factor is performed by using the map indicating the relationship among the first parameter, the second parameter, and the severity factor, the calculation of the severity factor is performed in consideration of the non-linearity of the degree of superheat of the fluid flowing into the compressor with respect to the life consumption. By calculating the accumulated life consumption which is the accumulated value of such severity factor, the condition of the valve of the compressor can be monitored accurately.

As for the rest, without departing from the spirit of the present disclosure, it is possible to replace the constituent elements in the above-described embodiments with known constituent elements, respectively, as needed and further, the above-described embodiments may be combined as needed.

The contents described in the above embodiments would be understood as follows, for instance.

(1) A condition monitoring system according to one aspect is a condition monitoring system for a valve of a compressor, including: a parameter acquisition unit for acquiring at least one first parameter indicating an operating condition of the compressor and a second parameter correlated with a degree of superheat of a fluid flowing into the compressor; a factor calculation unit for calculating, from a map defining a relationship among the first parameter, the second parameter, and a severity factor indicating a life consumption level of the valve, the severity factor corresponding to the first parameter and the second parameter; and a calculation unit for calculating an accumulated life consumption by accumulating a life consumption of the valve in a unit period, which is calculated using at least a length of the unit period, a rotation speed of the compressor for each unit period, and the severity factor.

According to the above aspect (1), the severity factor which serves as the assessment index corresponding to the life consumption of the valve of the compressor is calculated on the basis of both the first parameter indicating the operating condition and the second parameter correlated with the degree of superheat of the fluid flowing into the compressor. Since the calculation of the severity factor is performed by using the map indicating the relationship among the first parameter, the second parameter, and the severity factor, the calculation of the severity factor is performed in consideration of the non-linearity of the degree of superheat of the fluid flowing into the compressor with respect to the life consumption. By calculating the accumulated life consumption which is the accumulated value of such severity factor, the condition of the valve of the compressor can be monitored accurately.

(2) In another aspect, in the above aspect (1), the condition monitoring system further includes a life prediction unit for predicting a remaining life of the valve from a past trend of the accumulated life consumption.

According to the above aspect (2), the remaining life of the valve can suitably be predicted by sequentially calculating the accumulated life consumption and obtaining the transition of the future accumulated life consumption on the basis of the past trend.

(3) In another aspect, in the above aspect (2), the life prediction unit identifies the past trend on the basis of a life consumption increase rate of the accumulated life consumption in a predetermined period.

According to the above aspect (3), the past trend for predicting the remaining life of the valve can suitably be estimated by calculating the life consumption increase rate which is the amount of change in accumulated life consumption in the predetermined period.

(4) In another aspect, in the above aspect (2), the condition monitoring system further includes a maintenance timing recommendation unit for calculating a recommended timing for next maintenance on the basis of the remaining life.

According to the above aspect (4), the recommended timing for next maintenance can suitably be obtained on the basis of the remaining life of the compressor.

(5) In another aspect, in the above aspect (4), the condition monitoring system includes a calculation unit for comparing a maintenance timing preset for the compressor with the recommended timing for next maintenance, and selecting and giving notice of whichever is shorter.

According to the above aspect (5), by comparing the maintenance timing preset for the compressor with the recommended timing for next maintenance, which is calculated on the basis of the remaining life, and giving notice of whichever is shorter, it is possible to appropriately inform the user of the required maintenance timing.

(6) In another aspect, in any of the above aspects (1) to (5), the first parameter includes a suction pressure and a discharge pressure of the compressor.

According to the above aspect (6), by adopting the suction pressure and the discharge pressure of the compressor as the first parameter, the operating condition of the compressor can suitably be grasped.

(7) In another aspect, in any of the above aspects (1) to (6), the compressor is a reciprocating compressor.

According to the above aspect (7), the condition of the valve used for the reciprocating compressor can suitably be monitored on the basis of the accumulated life consumption.

(8) A condition monitoring method according to one aspect is a condition monitoring method for a valve of a compressor, including: a step of acquiring at least one first parameter indicating an operating condition of the compressor and a second parameter correlated with a degree of superheat of a fluid flowing into the compressor; a step of calculating, from a map defining a relationship among the first parameter, the second parameter, and a severity factor indicating a life consumption level of the valve, the severity factor corresponding to the first parameter and the second parameter; and a step of calculating an accumulated life consumption by accumulating a life consumption of the valve in a unit period, which is calculated using at least a length of the unit period, a rotation speed of the compressor for each unit period, and the severity factor.

According to the above aspect (8), the severity factor which serves as the assessment index corresponding to the life consumption of the valve of the compressor is calculated on the basis of both the first parameter indicating the operating condition and the second parameter correlated with the degree of superheat of the fluid flowing into the compressor. Since the calculation of the severity factor is performed by using the map indicating the relationship among the first parameter, the second parameter, and the severity factor, the calculation of the severity factor is performed in consideration of the non-linearity of the degree of superheat of the fluid flowing into the compressor with respect to the life consumption. By calculating the accumulated life consumption which is the accumulated value of such severity factor, the condition of the valve of the compressor can be monitored accurately.

Reference Signs List

| | |
|---|---|
| 1 | Compressor |
| 2 | Compressor body |
| 4 | Suction line |
| 6 | Discharge line |
| 8 | Motor |
| 10 | Drive shaft |
| 12 | Power source |
| 13 | Power supply line |
| 14 | Suction pressure sensor |
| 15 | Suction temperature sensor |
| 16 | Superheat degree sensor |
| 18 | Discharge pressure sensor |
| 20 | Power sensor |
| 22 | Rotation speed sensor |
| 100 | Condition monitoring system |
| 102 | Parameter acquisition unit |
| 104 | Factor calculation unit |
| 106 | Storage unit |
| 108 | Rotation speed acquisition unit |
| 110 | Calculation unit |
| 112 | Output unit |
| 114 | Accumulated life consumption calculation unit |
| 116 | Life prediction unit |
| 118 | Maintenance timing recommendation unit |
| L | Accumulated life consumption |
| Lthr | Accumulated life consumption threshold |
| M | Map |
| P1 | First parameter |
| P2 | Second parameter |
| S | Severity factor |

**Claims**

1. A condition monitoring system for a valve of a compressor, comprising:

   a parameter acquisition unit for acquiring at least one first parameter indicating an operating condition of the compressor and a second parameter correlated with a degree of superheat of a fluid flowing into the compressor;
   a factor calculation unit for calculating, from a map defining a relationship among the first parameter, the second parameter, and a severity factor indicating a life consumption level of the valve, the severity factor corresponding to the first parameter and the second parameter; and
   a calculation unit for calculating an accumulated life consumption by accumulating a life consumption of the valve in a unit period, which is calculated using at least a length of the unit period, a rotation speed of the compressor for each unit period, and the severity factor.

2. The condition monitoring system according to claim 1, further comprising a life prediction unit for predicting a remaining life of the valve from a past trend of the accumulated life consumption.

3. The condition monitoring system according to claim 2,
   wherein the life prediction unit identifies the past trend on the basis of a life consumption increase rate of the accumulated life consumption in a predetermined period.

4. The condition monitoring system according to claim 2, further comprising a maintenance timing recommendation unit for calculating a recommended timing for next maintenance on the basis of the remaining life.

5. The condition monitoring system according to claim 4, comprising a calculation unit for comparing a maintenance timing preset for the compressor with the recommended timing for next maintenance, and selecting and giving notice of whichever is shorter.

6. The condition monitoring system according to claim 1 or 2,
   wherein the first parameter includes a suction pressure and a discharge pressure of the compressor.

7. The condition monitoring system according to claim 1 or 2,
   wherein the compressor is a reciprocating compressor.

8. A condition monitoring method for a valve of a compressor, comprising:

   a step of acquiring at least one first parameter indicating an operating condition of the compressor and a second parameter correlated with a degree of superheat of a fluid flowing into the compressor;
   a step of acquiring, from a map defining a relationship among the first parameter, the second parameter, and a severity factor indicating a life consumption level of the valve, the severity factor corresponding to the first parameter and the second parameter; and
   a step of calculating an accumulated life consumption by accumulating a life consumption of the valve in a unit period, which is calculated using at least a length of the unit period, a rotation speed of the compressor for each unit period, and the severity factor.

# FIG. 1

# FIG.2

EP 4 579 081 A1

# FIG. 3

```
        ┌──────────┐
        │  Start   │
        └──────────┘
             │
             ▼
  ┌─────────────────────────┐
  │ Acquire parameters P1,P2 │──S1
  └─────────────────────────┘
             │
             ▼
  ┌─────────────────────────┐
  │      Acquire map        │──S2
  └─────────────────────────┘
             │
             ▼
  ┌─────────────────────────┐
  │ Calculate severity factor S │──S3
  └─────────────────────────┘
             │
             ▼
  ┌─────────────────────────┐
  │  Acquire rotation speed f │──S4
  └─────────────────────────┘
             │
             ▼
  ┌─────────────────────────┐
  │   Calculate accumulated │──S5
  │    life consumption L   │
  └─────────────────────────┘
             │
             ▼
  ┌─────────────────────────┐
  │      Predict life       │──S6
  └─────────────────────────┘
             │
             ▼
  ┌─────────────────────────┐
  │Calculate recommended timing│──S7
  │   for next maintenance  │
  └─────────────────────────┘
             │
             ▼
  ┌─────────────────────────┐
  │  Output monitoring result │──S8
  └─────────────────────────┘
             │
             ▼
        ┌──────────┐
        │   End    │
        └──────────┘
```

# FIG. 4

Severityfactor S

First parameter P1

Second parameter P2

M

50
45
40
35
30

40 35 30 25 20 15 10 5 0 -5

# FIG. 5

# FIG. 6

**EP 4 579 081 A1**

## INTERNATIONAL SEARCH REPORT

| | International application No. |
|---|---|
| | **PCT/JP2023/033960** |

| A. | CLASSIFICATION OF SUBJECT MATTER |
|---|---|

*F04B 49/10*(2006.01)i; *G01M 99/00*(2011.01)i
FI:   F04B49/10 331M; G01M99/00 Z

According to International Patent Classification (IPC) or to both national classification and IPC

| B. | FIELDS SEARCHED |
|---|---|

Minimum documentation searched (classification system followed by classification symbols)

F04B49/10; G01M99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 6306740 B2 (HITACHI INDUSTRIAL EQUIPMENT SYSTEMS CO., LTD.) 04 April 2018 (2018-04-04)<br>paragraphs [0014]-[0025], fig. 1-3 | 1-8 |
| A | JP 2020-154662 A (DAIKIN INDUSTRIES, LTD.) 24 September 2020 (2020-09-24)<br>paragraph [0042] | 1 |

| ☐ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/033960**

| Patent document cited in search report | | | Publication date (day/month/year) | Patent family member(s) | | | Publication date (day/month/year) |
|---|---|---|---|---|---|---|---|
| JP | 6306740 | B2 | 04 April 2018 | US | 2017/0298926 | A1 | |
| | | | | paragraphs [0020]-[0037], fig. 1-3 | | | |
| | | | | WO | 2016/084207 | A1 | |
| | | | | EP | 3225845 | A1 | |
| | | | | CN | 106574614 | A | |
| JP | 2020-154662 | A | 24 September 2020 | US | 2022/0253050 | A1 | |
| | | | | paragraph [0100] | | | |
| | | | | WO | 2020/189374 | A1 | |
| | | | | EP | 3944043 | A1 | |
| | | | | CN | 113330383 | A | |

Form PCT/ISA/210 (patent family annex) (January 2015)

**EP 4 579 081 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6306740 B